# EUROPÄISCHE PATENTSCHRIFT

(11) **EP 0 507 121 B1**
(45) Veröffentlichungstag und Bekanntmachung des Hinweises auf die Patenterteilung: **09.08.1995**
(21) Anmeldenummer: 92104157.0
(22) Anmeldetag: 11.03.1992
(51) Int. Cl.: B60F 1/00, B61J 1/02

(54) **Schiene-Strasse-Transportsystem**
Road-rail transport system
Système de transport rail-route

(30) Priorität: 26.03.1991 CH 915/91
(43) Veröffentlichungstag der Anmeldung: 07.10.1992
(73) Patentinhaber: INVENTIO AG, CH-6052 Hergiswil NW (CH)
(72) Erfinder: Anderegg, Kurt, CH-9424 Rheineck (CH)

(56) Entgegenhaltungen:
- CH-A- 396 076
- DE-A- 1 948 283
- DE-C- 961 548
- GB-A- 954 289
- US-A- 2 903 978
- US-A- 2 963 986
- US-A- 4 385 857

## Beschreibung

Die Erfindung betrifft ein Schiene-Strasse Transportsystem, bestehend aus Transportbehälter für Personentransport, Strassenzugfahrzeug, Schienenzugfahrzeug, Kupplungsdrehgestell und Geleiseanlage, wobei ein Transportbehälter für Personentransport auf der Strasse mit dem Strassenzugfahrzeug als Sattelschlepper oder auf der Schiene im Verband mit an den Enden der Transportbehälter für Personentransport untergeschobenen Kupplungsdrehgestellen bewegt von einem Schienenzugfahrzeug als Wagen eines Eisenbahnzuges verkehren kann, und wobei der Wechsel Schiene-Strasse und umgekehrt auf einer für diesen Zweck eingerichteten Geleiseanlage vollzogen wird.

Das erfindungsgemässe Transportsystem beruht auf dem bekannten RoadRailer-Prinzip. Es sind viele verschiedene Ausführungsformen bekannt.

Die Offenlegungsschrift DE 33 44 513 A1 beschreibt ein "Kombiniertes Strassen- und Bahn-Transportsystem", welches nach dem einleitend beschriebenen Prinzip funktioniert. Ferner werden technische Einzelheiten an den Kupplungsdrehgestellen beschrieben. Die Geleiseanlage besteht aus einem einzelnen normalen Geleise, auf welchem die für die Zusammenstellung eines Zuges benötigten Kupplungsdrehgestelle stehen.

Die Offenlegungsschrift DE 34 45 741 A1 beschreibt ein "Schiene-Strasse-Fahrzeug und daraus zusammengestellter Eisenbahnzug", wobei die Geleiseanlage nebst dem Geleise auf welchem der Zug zusammengestellt wird zusätzlich ein mit einer Weiche mit dem ersten Geleise verbundenes Nebengeleise aufweist, auf welchem eine beliebige Anzahl Kupplungsdrehgestelle abgestellt sind, die nach Bedarf unter die Transporteinheiten geschoben werden.

Ein Transportsystem dieser Art bildet den Oberbegriff des vorliegenden Anspruchs 1.

Die französische Patentanmeldung No. 2 638 414 beschreibt "Véhicules et dispositifs de transport transformables en wagons". Das Kupplungsdrehgestell weist als Besonderheit ein mit einem Mittelscharnier, zwei vertikalen Kupplungszapfen und Seitenanschlägen versehene Aufliegeplattform auf.

Die oben erwähnten Anmeldungen und der Stand der Technik allgemein weisen noch einige Mängel auf inform von umständlichen Wechseloperationen, Einschränkungen bezüglich der Vielfalt des zu tranportierenden Gutes und der Fixierung auf eine Spurweite pro Anlage.

Der vorliegenden Erfindung liegt die Aufgabe zugrunde, ein Schiene-Strasse Transportsystem zu schaffen, welches die genannten Mängel nicht aufweist, eine rasche Abwicklung der Wechseloperationen ermöglicht und zusätzliche Möglichkeiten bezüglich der Art des Transportgutes und der Wahl der Spurweite aufweist.

Diese Aufgabe wird durch die in den Ansprüchen gekennzeichnete Erfindung gelöst.

Die durch die Erfindung erreichten Vorteile liegen darin, dass ein Herauslösen einzelner Transportbehälter für Personentransport aus einem Zugsverband mit direktem Wechsel für den Strassentransport möglich ist, dass das Unterschieben und Wegschieben einzelner Kupplungsdrehgestelle an verschiedenen Stellen von und zu einem Nebengeleise möglich ist, und dass die Geleiseanlage zum Umspuren geeignet ist.

Ferner ermöglicht die im folgenden beschriebene Transporteinrichtung individuelle Reiseziele ohne Umsteigen zu erreichen und die Vorteile des Strassen- wie auch des Schienenverkehrs zu nutzen. Die Komfortverhältnisse entsprechen den eisenbahnspezifischen Normen und verbessern so auch den Reisekomfort auf der Strasse als "Bustrailer".

In den Zeichnungen ist ein Ausführungsbeispiel dargestellt und es zeigen
- Fig. 1: die Funktion des Systems beim Wechsel Schiene-Strasse und umgekehrt,
- Fig. 2: ein Zugsverband auf Schienen,
- Fig 3: ein Bustrailer auf der Strasse,
- Fig. 4: die Funktion des Systems beim erstmaligen Zusammenstellen eines Zugsverbandes auf Schienen,
- Fig. 5: die Bereitstellung eines Zugsverbandes für das Herauslösen einzelner Transportbehälter für Personentransport,
- Fig. 6: einen Zugsverband mit ausgeschwenkten Enden der Transportbehälter für Personentransport,
- Fig. 7: ein Transportbehälter für Personentransport,
- Fig. 8: ein Strassenzugfahrzeug,
- Fig. 9: ein Kupplungsdrehgestell,
- Fig.10: eine Darstellung der Längenveränderung bei gedrehtem Kupplungsdrehgestell,
- Fig.11: ein Kopf-Kupplungsdrehgestell,
- Fig.12: eine Kupplungsmechanik an Transportbehälter für Personentransport,
- Fig.13: eine Geleiseanlage,
- Fig.14: eine Geleiseanlage mit zwei verschiedenen Spurweiten,
- Fig.15: den Funktionsablauf Schiene-Strasse und
- Fig.16: den Funktionsablauf Strasse-Schiene.

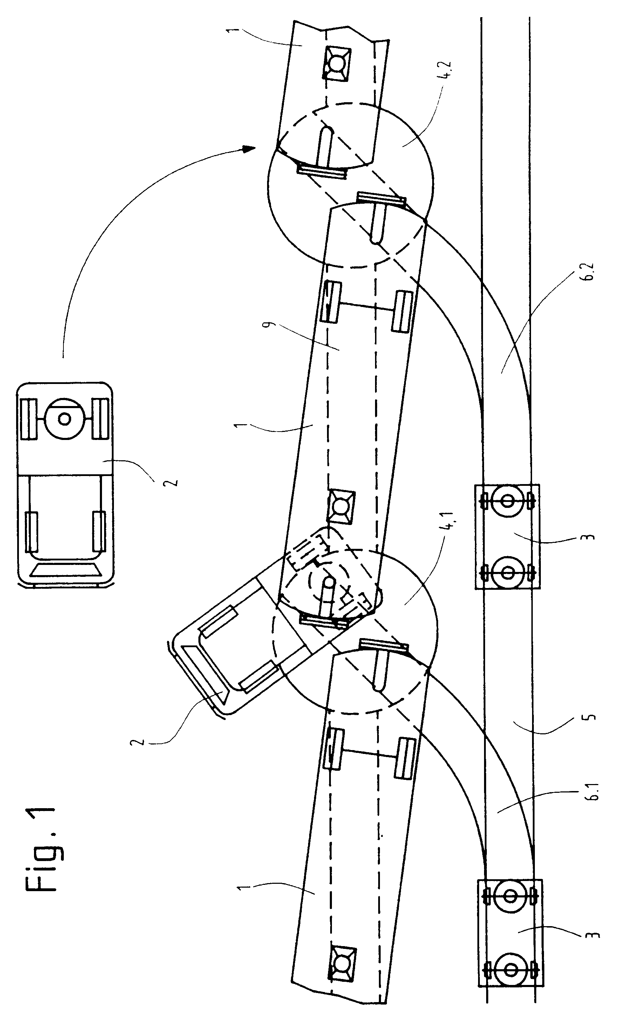

In der Fig. 1 sind mit 1 Transportbehälter für Personentransport, mit 2 Strassenzugfahrzeuge, mit 3 Kupplungsdrehgestelle, mit 4.1, 4.2 Drehscheiben und mit 5 ein Nebengeleise bezeichnet, das parallel zu einem gestrichelt dargestellten Systemgeleise 9 verläuft.

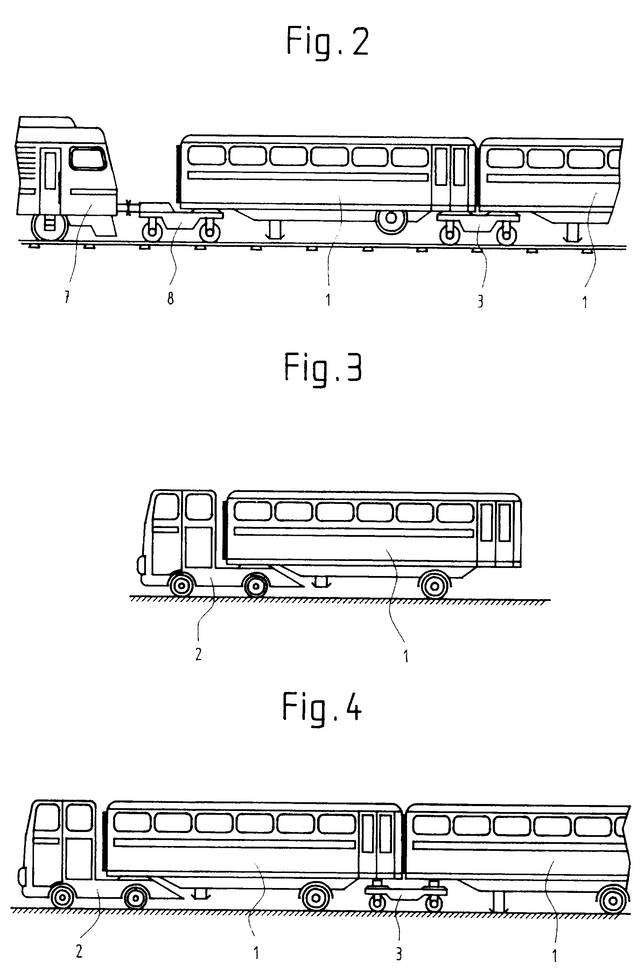

In der Fig. 2 ist mit 8 ein Kopf-Kupplungsdrehgestell und mit 7 ein Schienenzugfahrzeug bezeichnet. Auf dem Kopfdrehgestell 8 ist ein Ende des Transportbehälters für Personentransport 1 abgestützt und auf dem Drehgestell 3 sind zwei Enden von Transportbehälter für Personentransport 1 abgestützt.

Die Fig. 3 zeigt die Kombination der Transportbehälter für Personentransport 1 mit dem Strassenzugfahrzeug 2 zu einem Bustrailer.

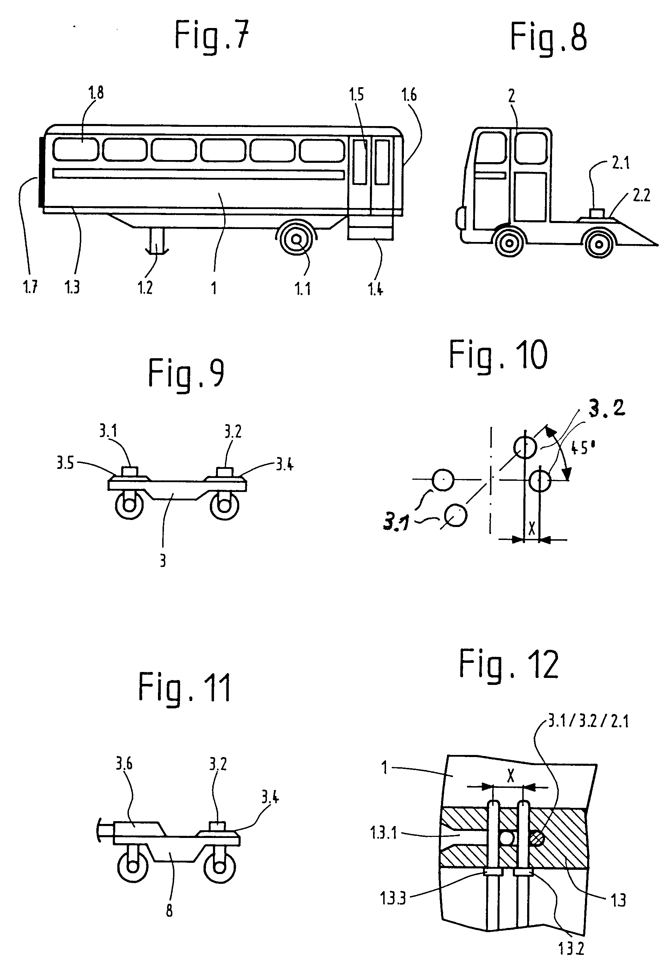

Die Fig. 7 zeigt den für den Personentransport geeigneten Transportbehälter für Personentransport 1. Es sind mit 1.1 die Strassenräder, mit 1.2 die Stütze, mit 1.3 die Kupplungsmechanik, mit 1.4 die Trittstufen, mit 1.5 die Wagentüre, mit 1.6 das rechte Ende, mit 1.7 das linke Ende und mit 1.8 die Fenster bezeichnet.

Das Strassenzugfahrzeug 2 gemäss Fig.8 weist einen vertikalen Kupplungszapfen 2.1 und eine Aufliegeplatte 2.2 auf.

Das Kupplungsdrehgestell 3 gemäss Fig. 9 weist über den Radachsen angeordnete Aufliegeplatten 3.4 und 3.5 und in deren Zentren vertikal angeordnete Kupplungszapfen 3.1 und 3.2 auf.

In der Fig. 10 wird dargestellt, wie sich beim Drehen eines Drehgestelles 3, 8 oder 11 um 45° die Positionen der Kupplungszapfen 3.1 und 3.2 in Bezug auf die Geleiseachse des Geleises 9 horizontal einwärts zum Drehgestellmittelpunkt je um den Betrag X verschieben. Die horizontale Distanz auf der Achse des Geleises 9 zwischen den Kupplungszapfen 3.1 und 3.2 ist also bei gedrehtem Drehgestell um den doppelten Betrag von X, also um 2X kürzer.

Das Kupplungsdrehgestell 8 gemäss Fig. 11 weist anstelle der linken Aufliegerplatte 3.5 mit dem Kupplungszapfen 3.1 ein Kopfteil 3.6 mit Puffer und nicht dargestellter Eisenbahnkupplung auf.

In der Fig. 12 ist die an der Unterseite der Transportbehälter für Personentransport 1 angeordnete Kupplungsmechanik 1.3 im horizontalen Querschnitt schematisch dargestellt. Mit 1.3.1 ist ein nach unten offener, beim Eintritt links trichterförmig erweiterter, den Kupplungszapfen 3.1, 3.2 oder 2.1 aufnehmender Kupplungskanal bezeichnet. Ein beispielsweise hydraulisch betätigter Riegelbolzen 1.3.2 fixiert in der gezeigten Stellung den Kupplungszapfen 3.1, 3.2 oder 2.1 in der Position für den Fahrbetrieb. Bei herausgefahrenem Riegelbolzen 1.3.2 bildet ein zweiter, noch eingefahrener Riegelbolzen 1.3.3 einen Anschlag mit horizontaler Spielmöglichkeit um eine Distanz X für den Kupplungszapfen 3.1, 3.2 oder 2.1. Das angegebene Mass X entspricht der in der Fig. 10 dargestellten horizontalen Positionsverschiebung der Kupplungszapfen 3.1 und 3.2 beim Drehen des Kupplungsdrehgestelles 3. Damit beim Drehen der Kupplungsdrehgestelle 3 kein Zusammenziehen des Zugsverbandes erfolgt, muss in den Kupplungsmechaniken 1.3 um diesen Betrag X ein Längsspiel für die Kupplungszapfen 3.1 und 3.2 möglich sein. Dies wird ermöglicht durch das Herausziehen der Riegelbolzen 1.3.2, wobei dann die Kupplungszapfen 3.1 und 3.2 das nötige Längsspiel um den Betrag X bis zum Riegelbolzen 1.3.3. Der Riegelbolzen 1.3.2 dient der möglichst längsspielarmen Kupplung der Transportbehälter für Personentransport 1 beim Fahrbetrieb. Vor dem Einfahren der Riegelbolzen 1.3.2 wird der Zugverband zusammengeschoben. Der schraffiert dargestellte Kupplungszapfen 3.1, 3.2, 2.1 zeigt seine Position im Fahrbetrieb. Der am Riegelbolzen 1.3.3 anliegende leere Kreis deutet die Position des Kupplungszapfens 3.1, 3.2, 2.1 in der Kupplungsmechanik 1.3 bezw. im Kupplungskanal 1.3.1 bei gedrehtem Kupplungsdrehgestell 3 an.

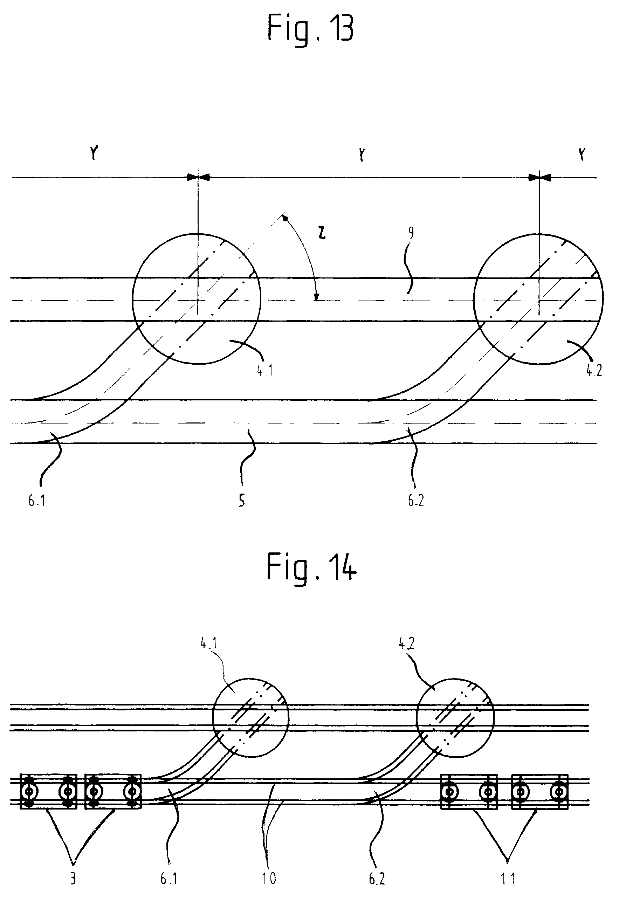

In der Fig. 13 ist die Geleiseanlage mit Systemgeleise 9, darin mit einem Abstand Y angeordneten Drehscheiben 4.1 und 4.2 und einem Nebengeleise 5 mit Weichen 6.1 und 6.2 dargestellt. Der Abstand Y von Zentrum zu Zentrum jeder Drehscheibe 4.1, 4.2 und weiteren (4.n) entspricht genau der Länge eines Transportbehälters für Personentransport 1. Die Drehscheiben 4.1, 4.2 bis 4.n können systembedingt zwei Positionen einnehmen. In der gezeigten Position ist das Systemgeleise 9 für eine Durchfahrt normal befahrbar, da die Schienenstücke auf den Drehscheiben 4.1, 4.2, 4.n mit jenen des Systemgeleises 9 fluchten. In der gestrichelt gezeichneten Position sind die Drehscheiben 4.1, 4.2, 4.n um einen Winkel Z von beispielsweise 45° gedreht und ihre Schienenstücke fluchten mit den Ablenkschienen der Weichen 6.1, 6.2 und weiteren (5.n).

Die Fig. 14 zeigt eine Geleiseanlage mit zwei Spurweiten. Eine mittig angeordnete zweite Spur 10 dient der Bildung einer Schmalspur. Auf der linken Seite des Nebengeleises 9 sind die Kupplungsdrehgestelle 3 der Normalspur und rechts Kupplungsdrehgestelle 11 für Schmalspur abgestellt.

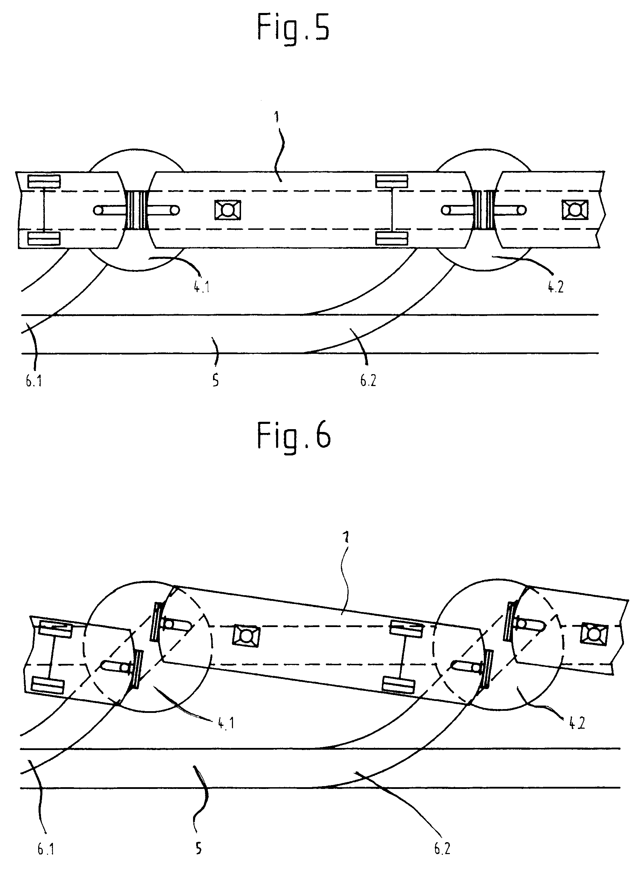

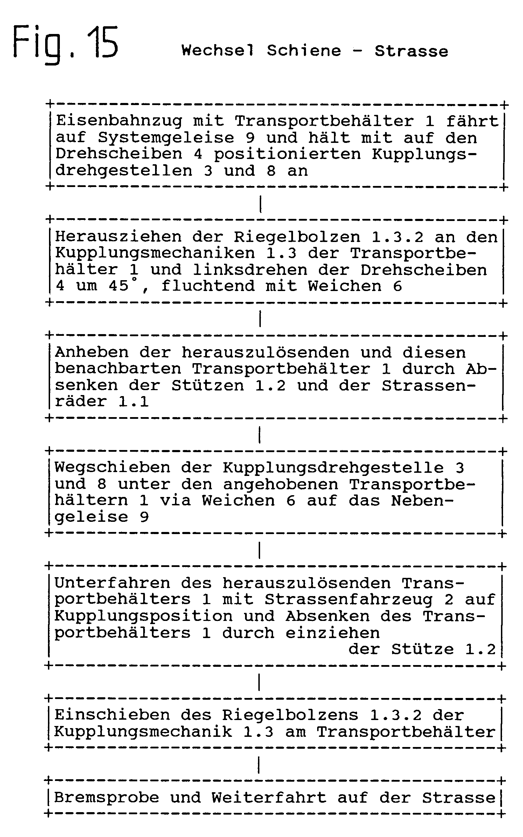

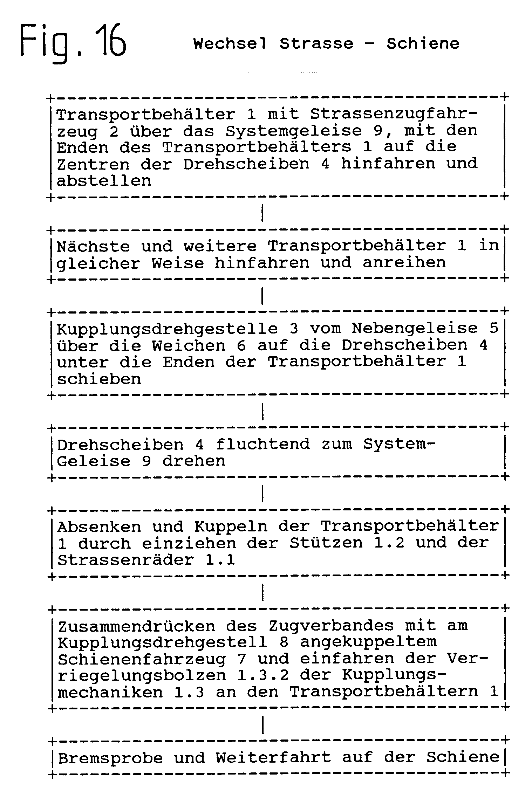

An Hand der Flussdiagramme in Fig. 15 und Fig. 16 werden im folgenden die Systemfunktionen beim Wechsel Schiene-Strasse und umgekehrt beschrieben. Ein Zugverband mit Transportbehälter für Personentransport 1 (Fig. 2) fährt auf das Systemgeleise 9 und hält an, wenn die Mitten der Kupplungsdrehgestelle 3 (8) über den Zentren der Drehscheiben 4 stehen (Fig. 5). Nun werden bei den Kupplungsmechaniken 1.3 der Transportbehälter für Personentransport 1 die Riegelbolzen 1.3.2 herausgezogen und horizontale Spielwege X für die Kupplungszapfen 3.1, 3.2 und 2.1 in den Kupplungskanälen 1.3.1 freigegeben. Diese Spielwege X werden für die nun folgende Drehung der Drehscheiben 4.1, 4.2, 4.n benötigt, weil sich die Zentren der Kupplungszapfen 3.1, 3.2, und 2.1 eben um diesen Betrag X horizontal einwärts hin zum Drehscheibenzentrum bewegen (Fig. 10). Nach der erfolgten Drehung der Drehscheiben 4.1, 4.2, 4.n um beispielsweise 45° sind die Stirnseiten der Transportbehälter für Personentransport 1 zueinander querverschoben gemäss der Darstellung in der Fig. 6. Durch Absenken der Stützen 1.2 und der Strassenräder 1.1 der herauszulösenden Transportbehälter für Personentransport 1 werden diese soweit angehoben, dass die Kupplungsdrehgestelle 3 via die Weichen 6.1, 6.2, 5.n auf das Nebengeleise 5 weggeschoben werden können.

Die gesamte Geleiseanlage gemäss Fig. 13 ist oberflächenbündig in einen mit Hartbelag versehenen ebenen Platz eingelassen und kann an jeder Stelle von Strassenfahrzeugen befahren werden. Die nun so dastehenden Transportbehälter für Personentransport 1 können jetzt von Strassenzugfahrzeugen 2 kupplungsseitig gemäss Darstellung in der Fig. 1 unterfahren, durch Einziehen der Stütze 1.2 mit dem Kupplungszapfen 2.1 des Strassenzugfahrzeuges 2 gekuppelt und dann aus dem Zugsverband weggefahren werden. Als "Bustrailer" gemäss Fig. 3 wird nun die Fahrt auf der Strasse fortgesetzt, wobei vor der eigentlichen Fahrt der Kupplungszapfen 2.1 ganz nach hinten geschoben, und dort durch einschieben des Riegelbolzens 1.3.2 fixiert wird. Das Unterfahren und Kuppeln der Transportbehälter für Personentransport 1 wird vorteilhaft mit etwas abgesenkter Kupplungsseite der Transportbehälter für Personentransport 1 (durch teilweises Einziehen der Stütze) und herausgefahrenen Riegelbolzen 1.3.3 und 1.3.2 vorgenommen, weil so der Kupplungszapfen 2.1 horizonatal via die trichterförmige Oeffnung des Kupplungskanals 1.3.1, von dessen Seitenflanken geführt, in diesen eingefahren werden kann.

Der Wechsel von der Strasse auf die Schiene erfolgt in umgekehrter Reihenfolge (Fig. 4). Auf einer Drehscheiben 4.n des Systemgeleises 9 wird ein erstes Kupplungsdrehgestell 3 bereitgestellt. Dann wird vom Strassenzugfahrzeug 2 ein erster Transportbehälter für Personentransport 1 derart darübergeschoben, dass der Kupplungszapfen 3.1 des Kupplungsdrehgestelles 3 und der Kupplungskanal 1.3.1 der Kupplungsmechanik 1.3 des Transportbehälters für Personentransport 1 vertikal übereineander stehen. Ein zweites Kupplungsdrehgestell 3 wird jetzt auf die Drehscheibe 4.2 gestellt, wobei sein Kupplungszapfen 3.1 unter den Kupplungskanal 1.3.1 am vorderen Ende der ersten Transportbehälter für Personentransport 1 zu stehen kommt. Es wird nun ein zweiter Transportbehälter für Personentransport 1 herangeführt und damit gleich verfahren wie mit dem ersten, dann ein dritter, vierter und so fort. Das letzte hin- und unterzustellende Kupplungsdrehgestell 8 ist für die Kupplung mit dem Schienenzugfahrzeug 7 bestimmt und ist gemäss Fig. 11 ausgebildet. Als letzte Operation werden alle Transportbehälter für Personentransport 1 durch Einziehen der Strassenräder 1.1 und der Stützen 1.2 auf die Kupplungsdrehgestelle 3 (8) abgesenkt und mit diesen gekuppelt. Nach dem Zusammendrücken des Verbandes sind auch alle Riegelbolzen 1.3.3 und 1.3.2 an den Kupplungsmechaniken 1.3 der Transportbehälter für Personentransport 1 eingefahren. Jetzt ist der Verband als Eisenbahnzug fahrbereit (Fig. 2).

Die übrigen Verbindungen unter den Transportbehälter für Personentransport 1, wie Bremsluft, Signal- und Speiseleitungen sind vor Abfahrt des Zuges ebenfalls erstellt worden, aber zugunsten der besseren Uebersicht nicht dargestellt.

Gemäss Fig.14 ist eine weitere Nutzung des Systems als Umspureinrichtung vorgesehen. Durch Hinzufügen einer zweiten Spur 10 in allen Geleisen, Geleisstücken und Weichen der Geleiseanlage ist das System befähigt, durch Auswechseln der Kupplungsdrehgestelle 3 mit Kupplungsdrehgestellen 11 und umgekehrt die Umspurung eines Zugverbandes auszuführen. Durch eine mittige Anordnung der Schmalspur werden wohl vier Schienen benötigt, aber es bringt den Vorteil, dass sich die Kupplungszapfen der Drehgestelle 3 und 11 auf einer gemeinsamen Gleismittellinie befinden.

Die Kupplungsmechaniken 1.3 sind nicht auf die gezeigte Ausführung beschränkt. Es sind verschiedene genormte Kupplungssysteme für diesen Zweck geeignet, wobei jeweils die Längenveränderung bei den Kupplungspunkten an den Transportbehälter für Personentransport 1 beim Drehen der Drehscheiben 4.1, 4.2, 4.n mittels einer entsprechenden Zusatzkonstruktion, beispielsweise inform einer Längsverschiebbarkeit der ganzen Kupplungsmechanik berücksichtigt werden muss, wobei mit Klinkenmechanismen feste Positionen für die Fahrt und mit mechanischen Anschlägen Limiten für die Verschiebewege markiert werden können. Die Längsverschiebbarkeit um den bekannten Betrag X kann, wie gezeigt, am Transportbehälter für Personentransport 1, aber auch beziehungsweise oder am Kupplungsdrehgestell 3, 8, 11 realisiert sein. Die Längsverschiebbarkeit kann auch nur auf einer Seite, vorzugsweise an der Vorderseite der Transportbehälter für Personentransport 1 vorgesehen werden, wobei dann eine Längsverschiebung um den Betrag 2X möglich sein muss.

Die Stützen 1.2 der Transportbehälter für Personentransport 1 können bei Bedarf mit Schwenk-Stützrädern ausgerüstet sein.

## Patentansprüche

1. Schiene-Strasse Transportsystem, bestehend aus Transportbehälter für Personentransport (1), Strassenzugfahrzeug (2), Schienenzugfahrzeug (7), Kupplungsdrehgestell (3) und Geleiseanlage, wobei ein Transportbehälter für Personentransport (1) auf der Strasse mit dem Strassenzugfahrzeug (2) als Sattelschlepper oder auf der Schiene im Verband mit an den Enden der Transportbehälter für Personentransport (1) untergeschobenen Kupplungsdrehgestellen (3) bewegt von einem Schienenzugfahrzeug (7) als Wagen eines Eisenbahnzuges verkehren kann, und wobei der Wechsel Schiene-Strasse und umgekehrt auf einer für diesen Zweck eingerichteten Geleiseanlage vollzogen wird,
dadurch gekennzeichnet,
dass die Geleiseanlage des Transportsystems ein Systemgeleise (9) mit in Abständen Y angeordeneten, das Hin- und Wegschieben und Drehen von Kupplungsdrehgestellen (3, 8, 11,) das Kuppeln, Entkuppeln und Schrägstellen zum Systemgeleise (9) von für den Personentransport ausgebildeten Transportbehältern für Personentransport (1) ermöglichenden Drehscheiben 4.1 bis 4.n und ein Nebengeleise (5) mit, mit den Drehscheiben (4. bis 4.n) verbindenden Weichen (6.1 bis 6.n) aufweist.

2. Transportsystem nach Anspruch 1
dadurch gekennzeichnet,
dass die Transportbehälter für Personentransport (1) an den Enden je eine, im gekuppelten Zustand eine Längsverschiebung um eine Distanz X ermöglichende Kupplungsmechanik (1.3) aufweisen.

3. Transportsystem nach den Ansprüchen 1 und 2
dadurch gekennzeichnet,
dass die Transportbehälter für Personentransport (1) an einem Ende eine, im gekuppelten Zustand eine Längsverschiebung um eine Distanz 2X ermöglichende Kupplungsmechanik (1.3) aufweisen.

4. Transportsystem nach Anspruch 1
dadurch gekennzeichnet,
dass ein, einenends mit einem Schienenzugfahrzeug (7) und anderenends mit einem Transportbehälter für Personentransport (1) kuppelbares Kupplungsdrehgestell (8) vorhanden ist.

5. Transportsystem nach Anspruch 1
dadurch gekennzeichnet,
dass, das Umspuren ermöglichende, für Schmalspur ausgebildete Kupplungsdrehgestelle (11) vorhanden sind.

6. Transportsystem nach Anspruch 1 und 5
dadurch gekennzeichnet,
dass die Geleisstücke der Anlage ein zweites, ein Umspuren ermöglichendes schmalspuriges Geleise (10) aufweisen.

## Claims

1. Rail-road transport system consisting of transport containers for passenger transport (1), road traction vehicle (2), rail traction vehicle (7), rotary coupling frame (3) and rail yard, wherein a transport container for passenger transport (1) can travel on the road with the road traction vehicle (2) as semitrailer tractor or on rails moved as carriage of a railway train by a rail traction vehicle (7) in conjunction with rotary coupling frames pushed under at the ends of the transport containers for passenger transport (1) and wherein the change from rail to road and conversely is made on a rail yard equipped for this purpose, characterised thereby, that the rail yard of the transport system comprises a system rail (9) with turntables (4.1 to 4.n), which are arranged at spacings Y and enable the pushing forward and away and the turning of rotary coupling frames (3, 8, 11) and the coupling, uncoupling, and setting obliquely to the system rail (9) of transport containers for passenger transport (1), which are constructed for the passenger transport, and a siding (5) with points (6.1 to 6.n) connecting with the turntables (4.1 to 4.n).

2. Transport system according to claim 1, characterised thereby, that the transport containers for passenger transport (1) at each of the ends display a respective coupling mechanism (1.3), which in the coupled state enables a longitudinal displacement through a distance X.

3. Transport system according to the claims 1 and 2, characterised thereby, that the transport containers for passenger transport (1) at one end display a coupling mechanism (1.3), which in the coupled state enables a longitudinal displacement through a distance 2X.

4. Transport system according to claim 1, characterised thereby, that a rotary coupling frame (8) is present, which is couplable at one end with a rail traction vehicle (7) and at the other end with a transport container for passenger transport (1).

5. Transport system according to claim 1, characterised thereby, that rotary coupling frames (11) are present, which are constructed for narrow gauge and enable the changing of gauge.

6. Transport system according to the claims 1 and 5, characterised thereby, that rail members of the yard comprise a second narrow gauge rail track (10) enabling a changing of gauge.

## Revendications

1. Système de transport rail-route formé d'une caisse mobile pour le transport de personnes (1), d'un véhicule tracteur routier (2), d'un véhicule tracteur sur rails (7), d'un bogie d'attelage (3) et d'une installation de voie, étant précisé qu'une caisse mobile pour le transport de personnes (1) peut circuler sur la route comme semi-remorque avec le véhicule tracteur routier (2), ou sur le rail comme voiture d'un train de chemin de fer, assemblée à des bogies d'attelage (3) amenés sous les extrémités des caisses mobiles pour le transport de personnes (1) et mue par un véhicule tracteur sur rails (7), et que le changement rail-route et inversement est réalisé sur une installation de voie aménagée à cet effet, caractérisé en ce que l'installation de voie du système de transport comporte une voie de système (9) pourvue de plaques tournantes 4.1 à 4.n qui sont disposées suivant des écartements Y et qui permettent d'amener et d'éloigner et de faire pivoter des bogies d'attelage (3, 8, 11), d'atteler, de dételer et de disposer en biais par rapport à la voie de système (9) des caisses mobiles pour le transport de personnes (1) conçues pour le transport de personnes (1), et une voie secondaire (5) pourvue d'aiguilles (6.1 à 6.n) qui assurent la liaison avec les plaques tournantes (4.1 à 4.n).

2. Système de transport selon la revendication 1, caractérisé en ce que les caisses mobiles pour le transport de personnes (1) comportent chacune, à leurs extrémités, un mécanisme d'attelage (1.3) qui permet, en position attelée, un déplacement longitudinal suivant une distance X.

3. Système de transport selon les revendications 1 et 2, caractérisé en ce que les caisses mobiles pour le transport de personnes (1) comportent, à une extrémité, un mécanisme d'attelage (1.3) qui permet, en position attelée, un déplacement longitudinal suivant une distance 2X.

4. Système de transport selon la revendication 1, caractérisé en ce qu'il est prévu un bogie d'attelage (8) apte à être attelé, à une extrémité, à un véhicule tracteur sur rails (7) et, à l'autre extrémité, à une caisse mobile pour le transport de personnes (1).

5. Système de transport selon la revendication 1, caractérisé en ce qu'il est prévu des bogies d'attelage (11) conçus pour un faible écartement, qui permettent le changement d'écartement.

6. Système de transport selon les revendications 1 et 5, caractérisé en ce que les tronçons de voie de l'installation comportent une seconde voie à faible écartement (10) qui permet un changement d'écartement.
